# EUROPEAN PATENT SPECIFICATION

(11) **EP 0 720 753 B1**
(45) Date of publication and mention of the grant of the patent: **04.02.1998**
(21) Application number: 94926992.2
(22) Date of filing: 20.09.1994
(51) Int. Cl.: G02F 1/00, G02B 5/30, B44F 1/14, B42D 15/10

(54) **COLOURED MATERIAL**
GEFÄRBTES MATERIAL
MATERIAU COLORE

(30) Priority: 22.09.1993 GB 9319551
(43) Date of publication of application: 10.07.1996
(73) Proprietor: CENTRAL RESEARCH LABORATORIES LIMITED, Hayes, Middlesex, UB3 1HH (GB)
(72) Inventor: DOBRUSSKIN, Christoph, Middlesex UB3 1HH (GB); SHANKS, Ian Central Research Laboratories, Middlesex UB3 1HH (GB); HOLDEN, John Central Research Laboratories, Hayes Middlesex UB3 1HH (GB)
(74) Representative: Marsh, Robin Geoffrey
(86) International application number: GB9402043
(87) International publication number: WO9508786

(56) References cited:
- WO-A-91/09745
- WO-A-91/13125
- DE-A- 3 732 115
- US-A- 3 697 152
- LIQUID CRYSTALS, vol.5, no.3, 1989, LONDON GB pages 907 - 916 EBERLE ET AL 'Inverse Angle Dependence of the Reflection Colours of Polymeric Liquid Crystals Mixed with Pigments'
- APPLIED OPTICS., vol.19, no.8, 15 April 1980, NEW YORK US pages 1274 - 1277 MAKOW 'Peak Reflectance and Color Gamut of Superimposed Left- and Right-Handed Cholesteric Liquid Crystals'

## Description

This invention relates to a coloured material comprising an aligned chiral liquid crystal polymer (CLCP) lamina of a first kind and an aligned chiral liquid crystal polymer (CLCP) lamina of a second kind, each lamina being reflective for light in a respective wavelength band when viewed at a given angle and being solid at room temperature, the lamina of the first kind comprising a CLCP which is reflective for infra-red light when viewed normal to its surface and reflective for visible light when viewed at an angle to the normal to its surface.

A known device disclosed in US patent 4,893,906 comprises layers of cholesteric liquid crystal polymers (CLCPs) coated onto a panel to produce interesting colour effects when viewed at different angles. However, such colour effects ("normal iridescence") always move from longer wavelengths (when viewed normal to the layer) to shorter wavelengths (when viewed at an angle to the normal). The same colour effects may be produced using other methods such as multi-layer interference layers, and the effects are often caused by simultaneous reflection in more than one wavelength band in the visible spectrum. However in this case layer thickness must be very accurately controlled, and fabrication is expensive. Such layers may be produced in many different ways and therefore can be copied by counterfeiters if used to security mark objects.

LIQUID CRYSTALS, vol.5, no.3, 1989, London GB, pages 907-916, Eberle et al. "Inverse Angle Dependence of the Reflection Colours of Polymeric Liquid Crystals Mixed with Pigments", discloses a means for reversing the direction of the effect, i.e. means for providing for movement from shorter wavelengths to longer wavelengths, the means comprising addition of pigment.

An object of the present invention is to enable these disadvantages to be mitigated.

A further object of the invention is to provide a coloured material for security marking objects.

A further object of the invention is to provide a coloured material for decorative use, for example as packaging or as a cosmetic.

According to the invention a coloured material as defined in the first paragraph above is characterized in that the lamina of the second kind comprises a CLCP which is reflective for visible light when viewed normal to its surface and reflective for ultra-violet light when viewed at a further angle to the normal to its surface, and the laminae are in the form of flakes.

According to a second aspect of the invention, there is provided a coloured material comprising a light transmissive medium and a plurality of aligned CLCP flakes distributed therein, the flakes either comprising (a) an aligned CLCP lamina of a first kind and an aligned CLCP lamina of a second kind, or (b) a composite of a layer of both kinds; the CLCP being a solid at room temperature and being reflective for light in respective wavelength bands when viewed at a given angle, the lamina of the first kind comprising a CLCP which is reflective for infra-red light when viewed normal to its surface and reflective for visible light when viewed at an angle to the normal to its surface, characterized in that the lamina of the second kind comprises a CLCP which is reflective for visible light when viewed normal to its surface and reflective for ultra-violet light when viewed at a further angle to the normal to its surface.

The coloured material may, for example, take the form of a plurality of layers, or a plurality of flakes comprising a single layer or a plurality of layers, the flakes being distributed in a light transmissive medium. The material comprising such flakes and a light transmissive medium may be used as a cosmetic or as an ink for security marking objects.

Embodiments of the invention will now be described, by way of example only, with reference to the accompanying diagrammatic drawings, in which
Figure 1 shows a cross-section through a first embodiment,
Figure 2 shows a cross-section through a second embodiment, and
Figure 3 shows a cross-section through a third embodiment.

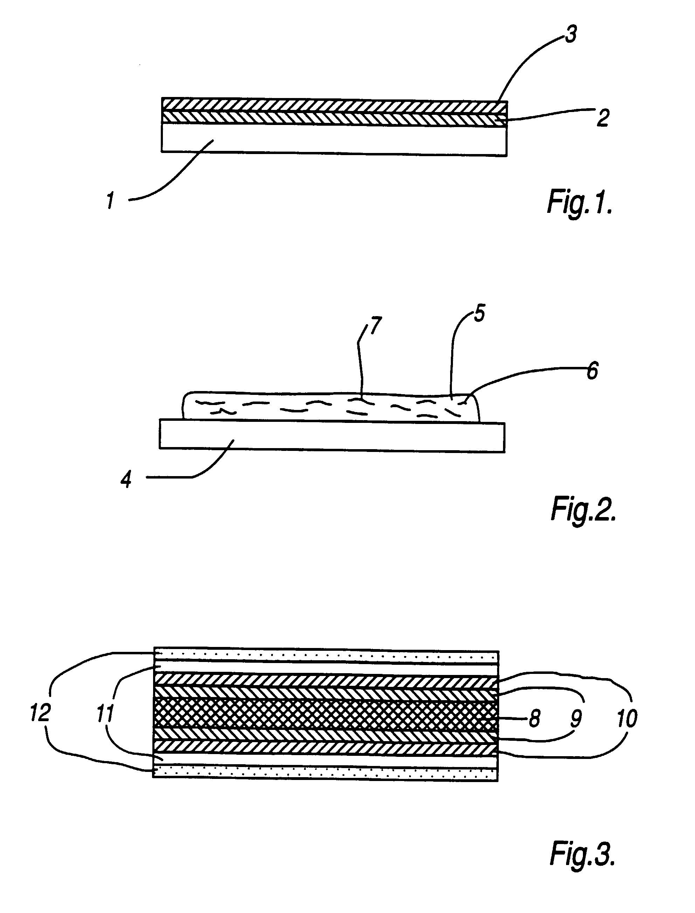

In the first embodiment shown in Figure 1, a coloured material comprises a first chiral liquid crystal polymer lamina 2 of a first (infra-red left hand circularly polarized light reflecting) kind, and a CLCP lamina 3 of a second (blue left hand circularly polarized light reflecting) kind, provided in the form of successive substantially parallel layers on a black plastic sheet 1 which absorbs visible light. Layer 2 reflects left-hand circularly polarized near infra-red light when viewed normal to its surface, and left-hand circularly polarized shorter wavelength visible (in the present case red) light when viewed at an angle to the normal to the surface. Layer 3 reflects left-hand circularly polarized visible (blue) light when viewed normal to its surface, and left-hand circularly polarized ultra-violet light when viewed at an angle to the normal to its surface. All other wavelength and polarization states are substantially transmitted by the layers and absorbed by the sheet 1. Layer 2 comprises a cholesteric liquid crystal polymer Wacker LC Silicone CC3767, and layer 3 comprises a cholesteric liquid crystal polymer Wacker LC Silicone CC3939.

The coloured material of Figure 1 is prepared in the following way. The CLCP of the layer 2 is mixed with a photo-initiator and spread over the sheet 1 between spacers using a doctor blade. During this operation the sheet is placed on a hot plate at a temperature of 70°C. This forms a layer of aligned CLCP. The CLCP is then cross-linked by exposing the layer to ultra-violet light keeping the temperature constant at 70°C. The layer 3 is then prepared in the same way, being deposited and aligned on top of layer 2, and the assembly is allowed to cool to room temperature before ultra-violet cross-linking the second layer.

If this embodiment is viewed normal to a major surface of the laminae it will appear blue because the lamina of the second kind reflects blue light and the lamina of the first kind reflects infra red light and thus appears transparent. If the coloured material is now rotated so that the laminae are viewed at oblique angles, the blue light reflected from the lamina of the second kind moves progressively into the ultra violet and thus appears transparent. At the same time the infra red light reflected from the lamina of the first kind will move progressively into the red part of the visible spectrum and thus appear red. With careful choice of the exact spectral positions of the respective wavelength bands the blue reflected light moves out of the visible spectrum at the same angle as that at which the infra red reflected light moves into the visible spectrum. This gives a distinctive "reverse iridescent" effect which cannot normally be observed using layers where the reflected wavelength shortens with increasing viewing angle. Thus the colour changes with increasing viewing angle are reversed when compared to "normal iridescence". The angle at which the colour change occurs may be varied by choosing polymers with respective wavelength bands at specific points in the spectrum.

In the second embodiment shown in Figure 2, a coloured material provided on a substrate 4 is constituted by an ink comprising sets of thin flakes 6, 7 together with a light transmissive medium 5. The flakes take the form of a single CLCP layer approximately 60 microns wide by 40 microns deep by 10 microns thick. The flakes 6 reflect left-hand circularly polarized infra-red light when viewed normal to their surface, and left-hand circularly polarized red light when viewed at an oblique angle. The flakes 7 reflect left-hand circularly polarized blue light when viewed normal to their surface, and left-hand circularly polarized ultra-violet light when viewed at an oblique angle. All other wavelength and polarization states are substantially transmitted by the flakes. Flakes 6 comprises Wacker LC Silicone CC3767, and flakes 7 comprise Wacker LC Silicone CC3939. The light transmissive medium in the present example is transparent nail varnish, but a number of different materials such as petroleum jelly, epoxy resin, silicone rubber, cellulose acetate butyrate (or PVC) + methyl ethyl ketone, or polyvinyl alcohol and water may be used as alternatives.

The flakes 6 of CLCP are made in the following way. Two clean glass plates with optically flat surfaces are coated with a thin layer of nylon by spin coating. These layers are rubbed with a velvet or silk cloth to provide a layer to align the mesogenic groups of the CLCP (this technique is well known for Liquid Crystal Display manufacture). Two self adhesive tape spacers 50 microns thick are provided at opposite edges of a major surface of each plate, and a solution of 33 parts of the un-cross-linked CLCP in 66 parts toluene with approximately 1 part photo-initiator is applied and spread evenly across the surfaces using a doctor blade or squeegee supported by the spacers. The tape spacers are removed from the glass plates and the plates are then placed side by side in a vacuum oven to drive off the solvent. The plates are then placed with the CLCP coatings facing one another with small pillar spacers at each corner between the plates. These spacers are such that they melt or deform at a predetermined temperature (in this case 85°C), and are sized so as to leave a clear air gap between the two CLCP coated surfaces before the spacers deform. This assembly is put in a bag sealer and encapsulated in a plastic bag from which the air is removed so that the CLCP coated surfaces face one another with no air between. This assembly is then put into a furnace at a temperature of 85°C. This melts the pillars so that the CLCP plates move towards one another. The CLCP also softens so that a film with flat surfaces aligned by the nylon coating is formed between the plates. The assembly is then exposed to UV radiation at 70°C to cross-link the polymer. The assembly is then allowed to cool, after which it is removed from the bag and prised apart. It is usual for portions of the area of the film (having the full layer thickness of approximately 10 microns) to adhere to each plate at this stage. Flakes of the polymer are then scraped off the plates using a hard instrument, and further ground with an agate mortar and pestle if required. Other grinding techniques such as ball milling or triple roll milling or ultrasonic agitation may be used as an alternative. The flakes 7 of blue CLCP are made in the same way, but UV cross-linked at room temperature.

As an alternative to the last mentioned way of making the flakes, the following technique may be used. Molten CLCP (mixed with initiator) is coated onto a polyester web to a thickness of 5 - 10 microns. For the above mentioned Wacker CLCPs an acceptable coating temperature is 85°C. A second polyester web is then laminated onto the CLCP layer. The lamination may be performed at room temperature ore at an elevated temperature. If an elevated temperature is used care must be taken to ensure that the laminating process does not reduce the thickness of the CLCP below the minimum required to obtain the optically variable properties (about 4 microns). The laminated web is then placed between two glass plates (one of which must be transparent to UV radiation) and exposed to UV light until appropriate cross-linking has been achieved. The laminate is then removed from the glass plates and separated. It is common for portions of the cross-linked CLCP film to adhere to either polyester web at this point. The coated webs are then submerged in isopropyl alcohol and screwed up. This causes fracturing of the CLCP film and also causes it to begin to separated from the polyester webs. The CLCP films can be completely removed from the webs by gentle brushing (e.g. with a soft toothbrush). This method of removing the CLCP film from the polyester webs causes the film to break into small flakes. The flakes are subsequently removed from the isopropyl alcohol by filtering through filter paper and dried. The mean diameter of the flakes will be influenced by the thickness of the original CLCP film. Reduction in the mean diameter of the flakes may be achieved by, for example, triple roll milling, although because of the friability of the flakes care must be taken not to reduce their mean diameter too much since this will effect the orientation of the flakes and thus the final optically variable properties of the material during subsequent printing.

Coloured materials with different properties may be formed by using different ratios of CLCP weight to medium weight. Mixtures with CLCP content as low as 0.5% may have a speckled appearance, whereas mixtures with CLCP content as high as 80% can be used to give a metallic or glittering appearance. In use, when such material is applied to a surface, the flakes tend to lie with their major surface parallel to the coated surface. Flake sizes up to several hundred microns across may be used, but for printing flake sizes of 20 - 30 microns may be used. Flake thicknesses of 3 microns or greater may be used. The colour effects produced by CLCPs are durable as they are not due to dyes but rather due to a structured matrix of molecules. A surface coated with such a material may be sanded down and/or polished and itself coated with a transparent lacquer to improve the colour effects or surface smoothness. Methods of manufacturing optical materials incorporating flakes of a CLCP are disclosed in the applicant's co-pending application number GB 9307038.1 which is hereby incorporated into the present application by reference.

Figure 3 shows a cross section through a particular flake, a plurality of which flakes may be used together with a light transmissive medium (not shown) to form an ink for security marking, for example, documents of value. The flake comprises a black plastic flake 8 which absorbs visible light. Successive layers of CLCP are provided on both major surfaces of this flake. Layers 9 reflect left hand circularly polarized infra red light when viewed normal to the surface, and left hand circularly polarized red light when viewed at an oblique angle. Layers 10 reflect right hand circularly polarized light in the same wavelength range as the layers 9 in the same way. Layers 11 reflect left hand circularly polarized blue light when viewed normal to the surface, and left hand circularly polarized ultra violet light when viewed at an oblique angle. Layers 12 reflect right hand circularly polarized light in the same wavelength range as the layers 11 in the same way.

The flakes need not have all the above mentioned layers present in each flake. For example one set of flakes may have CLCP layers which reflect left and right hand circularly polarized light in only one wavelength range. These flakes may then be mixed with similar flakes which reflect in the other wavelength range, together with a light transmissive medium to form an ink.

Mixtures of flakes may be used with different polarization reflecting properties. For example, (a) 35% right hand reflecting infra-red flakes plus 10% left hand reflecting infra-red flakes plus 55% left hand reflecting blue flakes, or (b) 25% of all four possible types, or (c) 30% left hand reflecting blue flakes plus 70% right hand reflecting red flakes, etc..

It is desirable that the light transmissive medium and the flakes have similar refractive indices, to minimize disturbance of light passing through the medium.

The coloured materials comprising a light transmissive medium and the laminae described above have many uses. They are particularly suitable for use as inks for document and banknote printing as the reflection spectral and polarization characteristics and their variation with angle of view cannot be reproduced photographically or by using interference multi-layers. The coating or material may be used to security mark CDs or credit cards or other goods to prevent counterfeiting. Decorative coatings may be produced for use in car paints, inks for use in textile printing, cosmetics including nail varnish, eye shadow, lipstick etc.. Coloured pigments may be included in the material together with the light transmissive medium and binders.

Although all the above embodiments are distinctive in that there is a colour change from blue to red with increasing viewing angle, other colours may be present at certain angles due to the colour additive properties of the layers. For example, the layer which reflects infra-red when viewed normal to its major surface may reflect green light at high viewing angles to give a blue - red - green colour change in a combination with the blue/ultra-violet layer. If two infra-red laminae are present, one reflecting in the near infra-red and one deeper into the infra-red, blue - red - bright yellow, or cyan - blue - red colour changes with increasing viewing angle are possible. These combinations yield complementary colours (i.e. cyan or yellow) which are not usually present in the reflected spectrum. If the angle at which the blue disappears is different from the angle at which the red appears, colour changes from blue to colourless to red or from blue to purple to red are obtained.

Such materials may be used for cosmetics such as, for example, eye shadow, lipstick and nail varnish, or as decorative coatings for cars or packaging or book covers in addition to use to security mark objects or documents or banknotes.

Although specific cholesteric liquid crystal polymer materials have been described for the above embodiments, chiral smectic liquid crystals or liquid crystal polymers may be used as an alternative.

## Claims

1. A coloured material comprising an aligned chiral liquid crystal polymer lamina (2) of a first kind and an aligned chiral liquid crystal polymer lamina (3) of a second kind, each lamina being reflective for light in a respective wavelength band when viewed at a given angle and being solid at room temperature, the lamina of the first kind comprising a chiral liquid crystal polymer which is reflective for infra-red light when viewed normal to its surface and reflective for visible light when viewed at an angle to the normal to its surface, characterized in that the lamina of the second kind comprises a chiral liquid crystal polymer which is reflective for visible light when viewed normal to its surface and reflective for ultra-violet light when viewed at a further angle to the normal to its surface, and the laminae are in the form of flakes.

2. A coloured material as claimed in claim 1 in which the said angle to the normal is equal to the said further angle to the normal, and the lamina of the first kind and the lamina of the second kind are substantially parallel to one another.

3. A coloured material as claimed in claim 1 including a plurality of laminae of the first kind, and a plurality of laminae of the second kind, the laminae being distributed in a light transmissive medium.

4. A coloured material as claimed in claim 3 in which laminae of the two kinds are layered on each other to form a composite flake, a plurality of which flakes are distributed in a light transmissive medium.

5. A coloured material as claimed in claim 1 or claim 3 in which the laminae take the form of layers on a surface of a body which does not transmit visible light.

6. A coloured material as claimed in claim 1 in which the laminae take the form of a plurality of successive chiral liquid crystal polymer layers, each respective layer being reflective for either left hand or right hand circularly polarized light such that both polarization states are reflected in a predetermined wavelength band at a given angle.

7. A security marking agent, or ink, or cosmetic comprising a coloured material as claimed in claim 3.

## Patentansprüche

1. Farbiges Material, das ein ausgerichtetes chirales Flüssigkristall-Polymerblättchen (2) einer ersten Art und ein ausgerichtetes chirales Flüssigkristall-Polymerblättchen (3) einer zweiten Art umfaßt, wobei jedes Blättchen Licht in einem entsprechenden Wellenlängenband bei Betrachtung unter einem gegebenen Winkel reflektiert und bei Raumtemperatur fest ist, wobei das Blättchen der ersten Art ein chirales Flüssigkristall-Polymer umfaßt, das bei Betrachtung senkrecht zu seiner Oberfläche infrarotes Licht und bei Betrachtung unter einem Winkel zu der Senkrechten zu seiner Oberfläche sichtbares Licht reflektiert, dadurch gekennzeichnet, daß das Blättchen der zweiten Art ein chirales Fiüssigkristall-Polymer umfaßt, das bei Betrachtung senkrecht zu seiner Oberfläche sichtbares Licht und bei Betrachtung unter einem weiteren Winkel zu der Senkrechten zu seiner Oberfläche ultraviolettes Licht reflektiert, und daß die Blättchen die Form von Flocken haben.

2. Farbiges Material nach Anspruch 1, bei dem der Winkel zu der Normalen gleich dem weiteren Winkel zu der Normalen ist, und bei dem das Blättchen der ersten Art und das Blättchen der zweiten Art weitgehend parallel zueinander sind.

3. Farbiges Material nach Anspruch 1, das eine Vielzahl von Blättchen der ersten Art und eine Vielzahl von Blättchen der zweiten Art enthält, wobei die Blättchen in einem lichtdurchlässigen Medium verteilt sind.

4. Farbiges Material nach Anspruch 3, bei dem die Blättchen der beiden Arten aufeinandergeschichtet sind, um eine zusammengesetzte Flocke zu bilden, wobei eine Vielzahl der Flocken in einem lichtdurchlässigen Medium verteilt ist.

5. Farbiges Material nach Anspruch 1 oder 3, bei dem die Blättchen die Form von Schichten auf der Oberfläche eines Körpers haben, der sichtbares Licht nicht durchläßt.

6. Farbiges Material nach Anspruch 1, bei dem die Blättchen die Form von einer Vielzahl von aufeinanderfolgenden chiralen Flüssigkristall-Polymerschichten haben, die entweder links- oder rechts-zirkular polarisiertes Licht reflektieren, so daß beide Polarisationszustände unter einem gegebenen Winkel in einem vorgegebenen Wellenlängenband reflektiert werden.

7. Sicherheits-Markierungsmittel oder Tinte oder Kosmetikum, umfassend ein farbiges Material gemäß Anspruch 3.

## Revendications

1. Un matériau coloré comprenant une couche de polymère de cristaux liquides chiraux alignés (2) d'un premier type et une couche de polymère de cristaux liquides chiraux alignés (3) d'un second type, chaque couche réfléchissant la lumière dans un domaine de longueurs d'onde respectif lorsqu'elle est vue selon un angle donné et étant solide à température ambiante, la couche du premier type comprenant un polymère de cristaux liquides chiraux qui réfléchit la lumière infrarouge lorsqu'elle est vue perpendiculairement à sa surface et qui réfléchit la lumière visible lorsqu'elle est vue selon un angle formé avec la normale de sa surface, caractérisé en ce que la couche du second type comprend un polymère de cristaux liquides chiraux qui réfléchit la lumière visible lorsqu'elle est vue perpendiculairement à sa surface et qui réfléchit la lumière ultraviolette lorsqu'elle est vue selon un autre angle formé avec la normale de sa surface, et en ce que les couches se présentent sous la forme de paillettes.

2. Un matériau coloré tel que revendiqué dans la Revendication 1, dans lequel ledit angle formé avec la normale est égal au dit autre angle formé avec la normale, et dans lequel la couche du premier type et la couche du second type sont substantiellement parallèles.

3. Un matériau coloré tel que revendiqué dans la Revendication 1, comprenant une pluralité de couches du premier type, et une pluralité de couches du second type, les couches étant réparties dans un milieu de transmission de la lumière.

4. Un matériau coloré tel que revendiqué dans la Revendication 3, dans lequel les couches des deux types sont superposées pour former un matériau composite de paillettes, dont une pluralité de paillettes sont réparties dans un milieu de transmission de la lumière.

5. Un matériau coloré tel que revendiqué dans la Revendication 1 ou 3, dans lequel les couches stratifiées prennent la forme de couches sur une surface d'un corps qui ne transmet pas la lumière visible.

6. Un matériau coloré tel que revendiqué dans la Revendication 1, dans lequel les couches stratifiées prennent la forme d'une pluralité de couches successives de polymère de cristaux liquides chiraux alignés, chaque couche respective reflétant la lumière à polarisation circulaire gauche ou droite de façon telle que les deux états de polarisation soient réfléchis dans un domaine de longueurs d'onde prédéterminé selon un angle donné.

7. Un agent de marquage sécuritaire, ou une encre, ou un produit cosmétique comprenant un matériau coloré tel que revendiqué dans la Revendication 3.
